(19) Europäisches Patentamt
European Patent Office
Office européen des brevets

(11) **EP 3 252 850 B1**

(12) **EUROPEAN PATENT SPECIFICATION**

(45) Date of publication and mention of the grant of the patent:
**01.07.2020 Bulletin 2020/27**

(21) Application number: **16743233.5**

(22) Date of filing: **22.01.2016**

(51) Int Cl.:
**H01M 2/16** (2006.01)     **H01G 9/02** (2006.01)
**H01G 11/52** (2013.01)     **H01G 11/84** (2013.01)

(86) International application number:
**PCT/JP2016/051786**

(87) International publication number:
**WO 2016/121630 (04.08.2016 Gazette 2016/31)**

(54) **MULTILAYERED HEAT-RESISTANT SEPARATOR ELEMENT AND METHOD FOR MANUFACTURING SAME**

WÄRMEBESTÄNDIGES MEHRSCHICHTIGES TRENNELEMENT UND VERFAHREN ZUR HERSTELLUNG DAVON

ÉLÉMENT SÉPARATEUR MULTICOUCHE RÉSISTANT À LA CHALEUR ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2015 JP 2015016348**

(43) Date of publication of application:
**06.12.2017 Bulletin 2017/49**

(73) Proprietors:
• **JNC Corporation**
  **Chiyoda-ku**
  **Tokyo 100-8105 (JP)**
• **JNC Petrochemical Corporation**
  **Tokyo 100-0004 (JP)**

(72) Inventors:
• **SAKAMOTO Kazuyuki**
  **Ichihara-shi**
  **Chiba 290-8551 (JP)**
• **FUKUDA Hirokazu**
  **Ichihara-shi**
  **Chiba 290-8551 (JP)**
• **ENOKI Nobuo**
  **Ichihara-shi**
  **Chiba 290-8551 (JP)**
• **ITOU Shingo**
  **Ichihara-shi**
  **Chiba 290-8551 (JP)**

(74) Representative: **Thurston, Joanna**
  **Withers & Rogers LLP**
  **4 More London Riverside**
  **London SE1 2AU (GB)**

(56) References cited:
EP-A1- 0 682 376          EP-A1- 1 369 221
WO-A1-2013/031012          WO-A1-2013/146402
WO-A1-2014/002701          WO-A1-2014/175050
JP-A- H11 238 497          JP-A- 2012 182 084
JP-A- 2012 182 084          JP-A- 2014 222 563
JP-A- 2014 222 563          US-A1- 2014 377 630

EP 3 252 850 B1

**Description**

[Technical Field]

The present invention relates to a multilayered heat-resistant separator element and a method for manufacturing same.

[Background Art]

Microporous membranes made of polyolefin are used for separation membranes, battery separators, capacitors, and the like. Among them, battery separator applications have been focused on according to the progressive development of lithium ion batteries in recent years. A battery separator is a member that functions as a partition wall of an electrolyte and also has ion permeability that is directly linked to a charging and discharging capacity of a battery.

In recent years, for lithium ion batteries and nickel metal hydride batteries suitable for vehicles and mobile terminals, small batteries with a high energy density, a high output, and high durability and safety are required. In such batteries, a battery separator made of a polyolefin microporous membrane and a sheet electrode that are laminated or wound in a battery main body with an electrolyte layer therebetween are arranged inside a main body.

When a temperature inside the battery increases to a polyolefin melting temperature or higher, a polyolefin constituting the separator melts and blocks pores in the separator, ion transfer between electrodes is stopped, and a battery function is shut down. This shutdown operation is an important function for preventing ignition or fuming of a battery, and is an important function of the separator along with ion conductivity. Incidentally, an example of an accident in which this shutdown function was not sufficient, a battery internal temperature exceeded 150 °C, and ignition occurred was reported.

Here, in recent years, in order to further increase heat resistance of a battery, the development of a multilayered heat-resistant separator element in which an inorganic particle layer is applied to a separator has progressed. The multilayered heat-resistant separator element is manufactured when a heat-resistant layer material containing inorganic particles and a binder is applied to a substrate film such as a polyolefin microporous membrane and dried.

However, problems specific to a separator element obtained by laminating different materials have been pointed out. In such a multilayered separator element, generally, problems of distortion such as "warpage" or "curling" occur due to a difference in shrinkage rate between the substrate film and the heat-resistant material layer.

In Patent Literatures 1 and 2, methods of preventing curling when a heat-resistant layer containing an inorganic substance as a main component and a substrate made of a resin are laminated are described. In Patent Literature 1, it is described that curling is prevented by regulating the thickness of the substrate film and the heat-resistant layer. In Patent Literature 2, it is described that curling is prevented by providing a low pore area at a specific portion of a multilayered heat-resistant separator element. However, since the substrate of the multilayered separator element described in Patent Literatures 1 and 2 is substantially a polyethylene microporous membrane, multilayered separator elements to which the curling prevention method described in Patent Literatures 1 and 2 can be applied are limited.

As described in Patent Literature 3, the applicant of the present invention has already succeeded in manufacturing a multilayered heat-resistant separator element by applying a coating solution containing an inorganic filler to a polyolefin microporous membrane product to form a heat-resistant layer. However, in the multilayered heat-resistant separator element described in Patent Literature 3, curling prevention was not examined.

[Citation List]

[Patent Literature]

[Patent Literature 1]
PCT International Publication No. WO2012/176669, pamphlet
[Patent Literature 2]
PCT International Publication No. WO2013/031012, pamphlet
[Patent Literature 3]
PCT International Publication No. WO 2014/030507, pamphlet [Patent Literature 4]

JP 2012 182084 A

[Summary of Invention]

[Technical Problem]

As described above, methods of preventing the occurrence of curling in a multilayered heat-resistant separator element in which a heat-resistant layer is provided on a polyolefin substrate film have not yet been sufficiently examined. Here, the inventor of the present invention extensively examined a multilayered heat-resistant separator element in which warpage and curling are reliably prevented using a polyolefin substrate film.

[Solution to Problem]

As a result, it is found that, when a specific polyolefin microporous membrane is selected as a substrate and a heat-resistant layer is formed under specific conditions, warpage and curling in a multilayered heat-resistant separator element are prevented significantly.

That is, the present invention is as follows.

A multilayered heat-resistant separator element according to claim 1.

A method of manufacturing a multilayered heat-resistant separator element according to claim 5.

Further embodiments are disclosed in dependent claims.

Curling in the multilayered heat-resistant separator of the present invention is minimized to a range in which there is no problem in practice. When the multilayered heat-resistant separator element on which Process 3 is completed is placed on a flat table at 25 °C and left for 24 hours, even if an end of the separator element is lifted from the surface of the table due to curling, a lifting amount (the height from the surface of the table to the end) is minimized to 10 mm or less in a rectangular sample of 30 cm in the length direction × 20 cm in the width direction. The multilayered heat-resistant separator element in which the occurrence of curling is minimized in this way has substantially no problem when a battery separator element is processed and does not deteriorate battery performance.

[Description of Embodiments]

[Multilayered heat-resistant separator element]

A multilayered heat-resistant separator element of the present invention is obtained by laminating an inorganic heat-resistant layer on at least one surface of a substrate film made of a polyolefin microporous membrane having an elongation of 2% or less when tensioned at 10 N/mm$^2$ at 100 °C. The thickness of the substrate film is 10 to 30 $\mu$m, and the thickness of one inorganic heat-resistant layer is 1 to 5 $\mu$m. A curl height measured by the following method (a) is less than 10 mm.

Curl height measurement method (a): a rectangular sample of 30 cm in the length direction × 20 cm in the width direction cut out from a multilayered heat-resistant separator element is left under an atmosphere at 25 °C for 24 hours, and then placed on a horizontal table such that a shrunk surface side faces upward. Heights (mm) of four corners of the sample from the table are measured. An average value (mm) of the four heights (mm) is calculated as a curl height (mm).

[Substrate film]

A substrate film used in the present invention is a polyolefin microporous membrane. A polyolefin is a polymer obtained by polymerizing monomers containing mainly olefins. Representative olefins are linear olefins having 2 to 10 carbon atoms. In addition, branched olefins, styrenes, and dienes having 4 to 8 carbon atoms such as 2-methylpropene, 3-methyl-1-butene, and 4-methyl-1-pentene can be used in combination. Representative polyolefins are polymers called polyethylene and polypropylene. Polyethylene is an ethylene homopolymer or polymer obtained by copolymerizing ethylene and a comonomer containing at least one selected from among $\alpha$-olefins having 3 to 8 carbon atoms. Polypropylene is a propylene homopolymer or polymer obtained by copolymerizing propylene and a comonomer containing at least one selected from among ethylene and $\alpha$-olefins having 4 to 8 carbon atoms.

As a raw material of the substrate film used in the present invention, a highly crystalline polypropylene having a high melting point is preferable. As a particularly preferable polypropylene, a propylene polymer which has a melt mass flow rate (MFR, measured under conditions according to JIS K6758 (230 °C, 21.18 N)) of 0.1 to 1.0 g/10 min and a melting point of 150 to 170 °C, and optionally contains at least one selected from among ethylene and $\alpha$-olefins having 4 to 8 carbon atoms. A content of the above comonomer may be in any range as long as the substrate film satisfies predetermined elongation conditions.

The substrate film used in the present invention satisfies specific elongation conditions. That is, an elongation when a test piece made of the substrate film is tensioned at 10 N/mm$^2$ using a tensile testing machine at 100 °C is in a range of 2% or less. The elongation (%) is obtained by the following formula.

$$\text{Elongation }(\%) = [(\text{length (mm) of tensioned test piece)} - (\text{length (mm) of initial test piece)}]/(\text{length (mm) of initial test piece)} \times 100$$

Additives such as a crystal nucleating agent and a filler can be blended into a raw material of the microporous membrane of the present invention. The type and the amount of the additive are not limited as long as the above elongation conditions are satisfied, and they are in a range in which the porosity necessary for the substrate of the separator element is not damaged.

[Manufacture of substrate film]

The substrate film used in the present invention may be any polyolefin microporous membrane that satisfies the above elongation conditions. As such a substrate film, a polyolefin microporous membrane that is manufactured by a so-called dry method, which is advantageous in terms of cost because no organic solvent is used, is preferable. As such a polyolefin microporous membrane, a microporous membrane having a porosity of 45% or more that is manufactured by a dry method including the following film formation process, heat treatment process, cold stretching process, hot stretching process, and relaxation process is particularly preferable.

(Film formation process)

In this process, a raw material is extruded and molded to form an original film. A polyolefin raw material is supplied to an extruder, the polyolefin raw material is melt-kneaded at a temperature of a melting point thereof or higher, and a film made of the polyolefin raw material is extruded from a die attached to the tip of the extruder. The extruder used is not limited. As the extruder, for example, any of a single screw extruder, a two-screw extruder, and a tandem extruder can be used. As the die used, any die that is used for forming a film can be used. As the die, for example, various T type dies can be used. The thickness and the shape of the original film are not particularly limited. A ratio (draft ratio) between the die slip clearance and the thickness of the original film is preferably 100 or more and more preferably 150 or more. The thickness of the original film is preferably 10 to 200 $\mu$m, and more preferably 15 to 100 $\mu$m.

(Heat treatment process)

In this process, the original film on which the film formation process is completed is heated. A constant tension is applied to the original film in the length direction at a temperature 5 to 65 °C lower than and preferably 10 to 25 °C lower than a melting point of the polyolefin raw material. A preferable tension is a tension at which the length of the original film becomes more than 1.0 times and 1.1 times or less the original length.

(Cold stretching process)

In this process, the original film on which the heat treatment process is completed is stretched at a relatively low temperature. The stretching temperature is -5 °C to 45 °C, and preferably 5 °C to 30 °C. The stretch ratio is 1.0 to 1.1 in the length direction, preferably 1.00 to 1.08, and more preferably 1.02 or more and less than 1.05. However, the stretch ratio is greater than 1.0 times. The stretching method is not limited. Known methods such as a roll stretching method, and a tenter stretching method can be used. The number of stretching steps can be arbitrarily set. One stretching stage may be performed or two or more stretching stages may be performed through a plurality of rollers. In the cold stretching process, molecules of the polypropylene polymer constituting the original film are oriented. As a result, a stretched film including a lamella part with a dense molecular chain and a region (craze) with a sparse molecular chain between lamellae is obtained.

(Hot stretching process)

In this process, the stretched film on which the cold stretching process is completed is stretched at a relatively high temperature. The stretching temperature is a temperature 5 to 65 °C lower than a melting point of the polypropylene polymer, and preferably, a temperature 10 to 45 °C lower than a melting point of the polyolefin raw material. The stretch ratio is 1.5 to 4.5 times, and preferably, 2.0 to 4.0 times in the length direction. The stretching method is not limited.

Known methods such as a roll stretching method, and a tenter stretching method can be used. The number of stretching steps can be arbitrarily set. One stretching stage may be performed or two or more stretching stages may be performed through a plurality of rollers. In the hot stretching process, the craze generated in the cold stretching process is elongated and pores are generated.

(Relaxation process)

In this process, in order to prevent the stretched film on which the hot stretching process is completed from shrinking, the film is relaxed. Generally, the relaxation temperature is a temperature slightly higher than a hot stretching temperature and a temperature 0 to 20 °C higher than a hot stretching temperature. The degree of relaxation is adjusted so that the length of the stretched film on which the relaxation process is completed finally becomes 0.7 to 1.0 times the original length. Thus, the substrate film used in the present invention is completed. The thickness of the final substrate film is 15 to 30 μm, and preferably 15 to 25 μm.

[Elongation of substrate film]

The substrate film used in the present invention satisfies specific elongation conditions. That is, an elongation when a test piece made of the substrate film is tensioned at 10 N/mm$^2$ using a tensile testing machine at 100 °C is in a range of 2% or less. The elongation (%) is obtained by the following formula.

$$\text{Elongation } (\%) = [(\text{length (mm) of tensioned test piece}) - (\text{length (mm) of initial test piece})]/(\text{length (mm) of initial test piece}) \times 100$$

[Inorganic heat-resistant layer]

An inorganic heat-resistant layer is formed on at least one surface of the substrate film. The inorganic heat-resistant layer is formed by applying an inorganic heat-resistant layer agent containing inorganic heat-resistant particles, a binder, and a solvent to the substrate film, and drying and solidifying a coating solution.
As the inorganic heat-resistant particles, an electrochemically stable inorganic substance having a primary particle size of 5 to 100 nm, a melting point of 200 °C or more, and a high insulation ability is used. For example, metal oxides such as alumina, silica, titania, zirconia, magnesia, and barium titanate, metal hydroxides such as aluminum hydroxide and magnesium hydroxide, and clay minerals such as boehmite, talc, kaolin, zeolite, apatite, halloysite, pyrophyllite, montmorillonite, sericite, mica, amesite, bentonite, calcium silicate, and magnesium silicate, are used. A mixture including a plurality of inorganic heat-resistant particles can also be used. Preferable inorganic heat-resistant particles are alumina, silica, titania, and boehmite.
The binder functions as an agent binding the substrate and the inorganic heat-resistant particles. As the binder, various resins such as a polyolefin, a fluorine-containing resin, rubber or an elastomer, celluloses, and a water soluble resin can be used. Preferable binders are polytetrafluoroethylene (PTFE) and polyvinyl fluoride (PVDF).
An amount ratio between the inorganic heat-resistant particles and the binder (inorganic heat-resistant particles : binder, weight ratio) is generally in a range of 40:60 to 98:2, preferably in a range of 50:50 to 95:5, and more preferably in a range of 60:40 to 90:10.
Generally, a solvent is added to the inorganic heat-resistant layer agent. As the solvent, a polar organic solvent such as water or acetone, N-methylpyrrolidone, dimethylacetamide, dimethylformamide, or dimethylsulfoxide can be used.
In addition to the inorganic heat-resistant particles and the binder, additives such as a dispersant, an antimicrobial agent, and a fungicide can be blended into the above inorganic heat-resistant layer agent if necessary.
Raw materials such as the inorganic heat-resistant particles, the binder, the solvent, and the additive described above are mixed and stirred to adjust an inorganic heat-resistant layer agent. The mixing and stirring methods are not limited as long as the inorganic heat-resistant particles are uniformly dispersed in the inorganic heat-resistant layer agent. In general, a homogenizer, a bead mill, and a jet mill are used.

[Method of manufacturing a multilayered heat-resistant separator element]

A method of manufacturing a multilayered heat-resistant separator element of the present invention includes the following Processes 1 to 3.

(Process 1)

In this process, a polyolefin microporous membrane having an elongation of 2% or less when tensioned at 10 N/mm² at 100 °C and having a thickness of 10 to 30 µm is manufactured. A polyolefin microporous membrane raw material and a method for manufacturing the same are as described above.

(Process 2)

In this process, an inorganic heat-resistant layer agent containing inorganic heat-resistant particles and a binder is applied to at least one surface of a substrate film made of the polyolefin microporous membrane obtained in Process 1. The application device is not limited. Any device that applies a liquid substance in a flat film form can be used, for example, a gravure coater, a micro gravure coater, a die coater, or a knife coater. In Process 2, the inorganic heat-resistant layer agent is applied so that the thickness of the inorganic heat-resistant layer agent provided on one surface of the substrate film is 1 to 5 µm, and preferably 1.5 to 4.0 µm.

(Process 3)

In this process, the film obtained in Process 2 is dried at a temperature of 80 to 120 °C and a tensile force of 4 to 10 N/mm², and the inorganic heat-resistant layer agent is dried. Due to the drying, the inorganic heat-resistant layer agent is solidified and the inorganic heat-resistant layer is formed. When Process 3 is completed, one inorganic heat-resistant layer with a thickness of 1 to 5 µm, and preferably 1.5 to 4 µm is formed. Thus, the multilayered heat-resistant separator element of the present invention is completed.

(Process 4)

In this process, the completed multilayered heat-resistant separator element is wound. In general, this process is performed after Process 3. The multilayered heat-resistant separator element of the present invention obtained in Process 3 is wound on a roller, packaged and stored until shipping. In general, a film having a length of several tens of meters to several hundred meters is wound on one roll core. Examples

(Manufacture of substrate film A)

As a raw material, a propylene polymer having a melt mass flow rate (MFR) measured according to JIS K6758 (230 °C, 21.18 N) of 0.5 g/10 min and a melting point of 165 °C was used.

(1) The raw material melt-kneaded in a single screw extruder was extruded from a T die at a draft ratio of 206 to manufacture an original film with a thickness of 17 µm.
(2) Next, the original film was heated at 150 °C.
(3) The original film was cold-stretched to 1.03 times at 30 °C in the length direction.
(4) A stretching heater temperature was maintained at 230 °C, and the stretched film obtained in Process 3 was hot-stretched to 2.8 times in the length direction.
(5) The obtained stretched film was relaxed so that the length became 0.88 times the original length. Thus, a microporous membrane having a porosity of greater than 45% was obtained. The obtained microporous film was used as a substrate film A in the following examples and comparative examples.

(Elongation of substrate film A)

Five belt-like test pieces were cut out from the obtained microporous film (120 mm in the film length (MD) direction)×(10 mm in the film width (TD) direction). Using a tensile testing machine commercially available from Shimadzu Corporation (autograph AGS-X) in a thermostat at 100 °C, a tensile force was applied to one test piece. The tension conditions were as follows: initial distance between chucks: 50 mm, tensile rate: 50 mm/min, tensile direction: test piece MD direction, and maximum tensile force: 10 N/mm² (tensile force per film cross-sectional area). Using the length (MD-max) (mm) of the test piece in the MD direction when the tensile force was 10 N/mm² and the length (120 mm) of the test piece in the MD direction before tension, an elongation (%) of the test piece was calculated by the following formula.

$$\text{Elongation } (\%) = ((\text{MD}-\text{max})-120) \div 120 \times 100$$

The elongation (%) of the five test pieces was obtained according to the same procedures as above. An average value of elongations (%) of the five test pieces was calculated as an elongation (%) of the substrate film A. The elongation of the substrate film A was 1.7%.

(Manufacture of substrate film B)

As a raw material, a propylene polymer having a melt mass flow rate (MFR) measured according to JIS K6758 (230 °C, 21.18 N) of 1.5 g/10 min and a melting point of 158 °C was used.

(1) The raw material melt-kneaded in a single screw extruder was extruded from a T die at a draft ratio of 205 to manufacture an original film with a thickness of 22 $\mu$m.
(2) Next, the original film was heated at 150 °C.
(3) The original film was cold-stretched to 1.07 times at 30 °C in the length direction.
(4) A stretching heater temperature was maintained at 175 °C, and the obtained stretched film was hot-stretched to 3.2 times in the length direction.
(5) The obtained stretched film was relaxed so that the length became 0.88 times the original length. Thus, a microporous membrane having a porosity of greater than 45% was obtained. The obtained microporous film was used as a substrate film for comparison B in the following comparative examples.

(Elongation of substrate film B)

The elongation of the substrate film B was obtained in the same manner as in the substrate film A, and was 2.4%.

(Manufacture of inorganic heat-resistant layer agent C)

$Al_2O_3$ (AEROXIDE AluC commercially available from Japan Aerosil) was used as inorganic heat-resistant particles. Polyvinylidene fluoride (Kyner HSV 500 commercially available from Arkema) was used as a binder. First, the inorganic heat-resistant particles (weight concentration of 9%) and the binder (weight concentration of 3%) were added to N-methylpyrrolidone (NMP) serving as a solvent, and stirred using a Disper for 1 hour at a rotational speed of 500 rpm. Further, the obtained slurry was treated once at a processing pressure of 200 MPa using a high pressure treatment device (Nanovater commercially available from Yoshida Kikai Co., Ltd.) and mixed, and an inorganic heat-resistant layer agent C in which the inorganic heat-resistant particles and the binder were uniformly dispersed was obtained.

(Example 1)

(Process 1) As described above, the substrate film A was manufactured.
(Process 2) The inorganic heat-resistant layer agent C was applied to one surface of the substrate film A using a gravure coater. The thickness of the applied inorganic heat-resistant layer agent was 4 $\mu$m.
(Process 3) A tension of 4.4 N/mm$^2$ was applied to the substrate film to which the inorganic heat-resistant layer agent was applied, the substrate film was transferred into a drying furnace at a temperature of 95 °C and the inorganic heat-resistant layer agent was dried and solidified. Thus, a multilayered heat-resistant separator element according to the method of the present invention was obtained. The occurrence of curling in the multilayered heat-resistant separator element was evaluated by the following method.

Table 1 shows conditions of Processes 1 to 3 and evaluation results of the occurrence of curling.

(Method of evaluating the occurrence of curling)

A rectangular test piece of (30 cm in the length (MD) direction)×(20 cm in the width (TD) direction) was cut out from the multilayered heat-resistant separator element. The test piece was left at an atmosphere of 25 °C for 24 hours. Then, it was visually determined which surface of the test piece shrank or curling occurred. The test piece was placed on a horizontal table such that the shrunk surface faced upward, and four corners of the sample were separated from the table. That is, the test piece seen from the side was curled in a valley shape on the table. The heights (mm) of the four corners from the table were measured. The height (mm) was an integer value rounded off after the decimal point (for example, if the height of one corner from the table was 0.1 mm, 0 mm was set as the height value). Finally, an average value (mm) of the four heights (mm) was calculated as a curl height (mm). When the curl height was 10 mm or more, it was determined as a defected product.

(Examples 2 to 9)

Conditions of Processes 1 to 3 in Example 1 were changed and multilayered heat-resistant separator elements of the present invention were manufactured. Table 1 shows conditions of the processes 1 to 3, and evaluation results of the occurrence of curling.

(Comparative Examples 1 to 9)

The conditions of the processes 1 to 3 in Example 1 were changed and multilayered heat-resistant separator elements for comparison were manufactured. Table 1 shows conditions of the processes 1 to 3, and evaluation results of the occurrence of curling.

[Table 1]

| | | Process 1 | | Process 2 | | Process 3 | | Curl height (mm) |
|---|---|---|---|---|---|---|---|---|
| | | Substrate film | Thickness of substrate film ($\mu$m) | Inorganic heat-resistant layer agent | Thickness of inorganic heat-resistant layer agent layer ($\mu$m) | Drying temperature (°C) | Tension (N/mm$^2$) | |
| Example | 1 | A | 16.0 | C | 4.0 | 95 | 4.4 | 2 |
| Example | 2 | A | 16.0 | C | 2.7 | 95 | 7.3 | 2 |
| Example | 3 | A | 20.6 | C | 3.4 | 90 | 5.3 | 4 |
| Example | 4 | A | 20.0 | C | 2.8 | 90 | 6.0 | 9 |
| Example | 5 | A | 20.0 | C | 2.5 | 90 | 7.3 | 9 |
| Example | 6 | A | 20.0 | C | 3.5 | 95 | 5.0 | 2 |
| Example | 7 | A | 21.0 | C | 2.8 | 95 | 5.4 | 0 |
| Example | 8 | A | 20.0 | C | 3.0 | 100 | 5.5 | 9 |
| Example | 9 | A | 20.0 | C | 3.0 | 100 | 6.5 | 4 |
| Comparative Example | 1 | A | 15.0 | C | 2.5 | 80 | 14.8 | Defect |
| Comparative Example | 2 | A | 20.0 | C | 4.0 | 90 | 12.7 | Defect |
| Comparative Example | 3 | B | 18.0 | C | 2.6 | 80 | 8.3 | Defect |
| Comparative Example | 4 | B | 18.0 | C | 2.7 | 80 | 13.9 | Defect |
| Comparative Example | 5 | B | 18.0 | C | 5.0 | 90 | 6.1 | Defect |
| Comparative Example | 6 | B | 18.0 | C | 4.8 | 90 | 6.7 | Defect |
| Comparative Example | 7 | B | 18.0 | C | 2.8 | 100 | 4.4 | Defect |
| Comparative Example | 8 | B | 18.0 | C | 2.5 | 100 | 5.6 | Defect |
| Comparative Example | 9 | B | 18.0 | C | 2.6 | 100 | 6.4 | Defect |

In Examples 1 to 9 in which the substrate film A was used in Process 1, and drying was performed at a temperature of 80 to 120 °C and a tensile force was 4 to 10 N/mm$^2$ in Process 2, there was substantially no curling, or even if there was curling, it was less than 10 mm, which is not a problem in practice. On the other hand, in Comparative Examples 1 to 9 in which the substrate film B was used in Process 1 or the drying condition in Process 2 was outside the regulation, a curl height of 10 mm or more was observed, which is a problem in practice.

[Industrial Applicability]

According to the present invention, it is possible to prevent the occurrence of curling in the multilayered heat-resistant separator element. The multilayered heat-resistant separator element of the present invention in which the occurrence of curling is prevented is advantageous in the battery assembling process and battery performance. The multilayered heat-resistant separator element of the present invention can be expected as an excellent battery separator element.

**Claims**

1. A multilayered heat-resistant separator element which is obtained by laminating an inorganic heat-resistant layer on at least one surface of a substrate film comprising a polyolefin microporous membrane having an elongation of 2% or less when tensioned at 10 N/mm$^2$ at 100 °C, wherein the polyolefin microporous membrane comprises a propylene polymer having a melt mass flow rate measured under conditions according to JIS K 6758 at 230 °C and a load of 21.18 N of 0.1 to 1.0 g/10 min and a melting point of 150 to 170 °C and optionally containing at least one selected from among ethylene and $\alpha$-olefins having 4 to 8 carbon atoms, and in which the thickness of the substrate film is 10 to 30 $\mu$m, the thickness of one inorganic heat-resistant layer is 1 to 5 $\mu$m, and a curl height measured by the following method (a) is less than 10 mm,
curl height measurement method (a): a rectangular sample of 30 cm in the length direction $\times$ 20 cm in the width direction cut out from a multilayered heat-resistant separator element is left under an atmosphere at 25 °C for 24 hours, and then placed on a horizontal table such that a shrunk surface side faces upward, heights of four corners of the sample from the table are measured, and an average value of the four heights is calculated as a curl height.

2. The multilayered heat-resistant separator element according to claim 1,
wherein the polyolefin microporous membrane is a polyolefin microporous membrane obtained by microporization a polyolefin according to a dry method containing a cold stretching process and a hot stretching process.

3. The multilayered heat-resistant separator element according to claim 1 or 2,
wherein the propylene polymer contains at least one selected from among ethylene and $\alpha$-olefins having 4 to 8 carbon atoms.

4. The multilayered heat-resistant separator element according to any one of claims 1 to 3,
wherein the inorganic heat-resistant layer contains alumina and a binder.

5. A method of manufacturing a multilayered heat-resistant separator element comprising the following processes,

Process 1: a process in which a polyolefin microporous membrane having an elongation of 2% or less when tensioned at 10 N/mm$^2$ at 100 °C and having a thickness of 10 to 30 $\mu$m is manufactured, wherein the polyolefin microporous membrane comprises a propylene polymer having a melt mass flow rate measured under conditions according to JIS K 6758 at 230 °C and a load of 21.18 N of 0.1 to 1.0 g/10 min and a melting point of 150 to 170 °C and optionally containing at least one selected from among ethylene and $\alpha$-olefins having 4 to 8 carbon atoms;
Process 2: a process in which an inorganic heat-resistant layer agent containing inorganic heat-resistant particles and a binder is applied to at least one surface of a substrate film comprising the polyolefin microporous membrane obtained in Process 1; and
Process 3: a process in which the substrate film applied with the inorganic heat-resistant layer agent obtained in Process 2 is dried at a temperature of 80 to 120 °C and a tensile force of 4 to 10 N/mm$^2$, and the inorganic heat-resistant layer agent is dried to form an inorganic heat-resistant layer having a thickness of 1 to 5 $\mu$m.

6. The method of manufacturing a multilayered heat-resistant separator element according to claim 5,
wherein, in Process 1, a polyolefin is converted into a microporous membrane according to a dry method containing a cold stretching process and a hot stretching process.

7. The method of manufacturing a multilayered heat-resistant separator element according to claim 5 or 6, wherein, in Process 1, according to a dry method containing a cold stretching process and a hot stretching process, the propylene polymer is converted into a microporous membrane.

8. The method of manufacturing a multilayered heat-resistant separator element according to any one of claims 5 to 7, wherein, in Process 2, an inorganic heat-resistant layer agent containing alumina and a binder is used.

**Patentansprüche**

1. Mehrschichtiges, wärmebeständiges Trennelement, das durch ein Laminieren einer anorganischen, wärmebeständigen Schicht auf mindestens einer Oberfläche eines Substratfilms, der eine mikroporöse Membran aus Polyolefin mit einer Dehnung von 2 % oder weniger aufweist, erhalten worden ist, wenn es mit 10 N/mm$^2$ bei 100 °C unter Spannung gesetzt wird, wobei die mikroporöse Membran aus Polyolefin ein Propylenpolymer ist, das einen Schmelzmassendurchsatz, der unter Bedingungen nach JIS K 6758 bei 230 °C und einer Last von 21,18 N gemessen wird, von 1,0 g / 10 min aufweist, und das einen Schmelzpunkt von 150 bis 170 °C aufweist und das gegebenenfalls mindestens eines enthält, das aus einem Ethylen und a-Olefinen, die 4 bis 8 Kohlenstoffatome aufweisen, ausgewählt worden ist, und bei dem die Dicke des Substratfilms 10 bis 30 $\mu$m beträgt, und bei dem die Dicke einer anorganischen, wärmebeständigen Schicht 1 bis 5 $\mu$m beträgt und bei dem eine Kräuselungshöhe, die nach dem folgenden Verfahren (a) gemessen wird, geringer als 10 mm ist
Verfahren (a) zur Messung der Kräuselungshöhe: eine rechteckige Probe von 30 cm in der Längenrichtung x 20 cm in der Breitenrichtung, die aus einem mehrschichtigen, wärmebeständigen Trennelement herausgeschnitten worden ist, wird 24 Stunden lang unter einer Atmosphäre bei 25 °C gelassen und dann auf einen horizontalen Tisch auf eine solche Weise gestellt, dass eine Seite einer geschrumpften Oberfläche in Richtung nach oben liegt, wobei Höhen von vier Ecken der Probe von dem Tisch gemessen werden und ein Mittelwert der vier Höhen als eine Kräuselungshöhe berechnet wird.

2. Mehrschichtiges, wärmebeständiges Trennelement nach Anspruch 1, wobei die mikroporöse Membran aus Polyolefin eine mikroporöse Membran aus Polyolefin ist, die durch eine Mikroporisation eines Polyolefin nach einem Trocknungsverfahren erhalten worden ist, das ein Verfahren mit einer kalten Dehnung und ein Verfahren mit einer heißen Dehnung enthält.

3. Mehrschichtiges, wärmebeständiges Trennelement nach Anspruch 1 oder 2, wobei das Propylenpolymer mindestens eines enthält, das aus einem Ethylen und Aolefinen, die 4 bis 8 Kohlenstoffatomen aufweisen, ausgewählt worden ist.

4. Mehrschichtiges, wärmebeständiges Trennelement nach einem der Ansprüche 1 auf 3, wobei die anorganische, wärmebeständige Schicht ein Aluminiumoxid und ein Bindemittel enthält.

5. Verfahren zur Herstellung eines mehrschichtigen, wärmebeständigen Trennelementes, welches die folgenden Schritte umfasst,

Schritt 1: ein Schritt, bei dem eine mikroporöse Membran aus Polyolefin mit einer Dehnung von 2 % oder weniger bei einer Last von 10 N/mm$^2$ bei 100 °C und einer Dicke von 10 bis 30 Uhr hergestellt wird, wobei die mikroporöse Membran aus Polyolefin ein Propylenpolymer ist, das einen Schmelzmassendurchsatz, der unter Bedingungen nach JIS K 6758 bei 230 °C und einer Last von 21,18 N gemessen wird, von 1,0 g / 10 min aufweist, und das einem Schmelzpunkt von 150 bis 170 °C aufweist, und das gegebenenfalls eines enthält, das aus einem Ethylen und Aolefinen, die 4 bis 8 Kohlenstoffatome aufweisen, ausgewählt worden ist,
Schritt 2: ein Schritt, bei dem ein anorganisches, wärmebeständiges Schichtmittel, das anorganische, wärmebeständige Teilchen und ein Bindemittel enthält, auf mindestens eine Oberfläche eines Substratfilms aufgebracht wird, der die in dem Schritt 1 erhaltene mikroporöse Membran aus Polyolefin enthält, und
Schritt 3: ein Schritt, bei dem der Substratfilm, auf den das anorganische, wärmebeständige Schichtmittel in dem Schritt 2 aufgebracht worden ist, bei einer Temperatur von 80 bis 120 °C und einer Zugkraft von 4 bis 10 N/mm$^2$ getrocknet wird, und bei dem das anorganische, wärmebeständige Schichtmittel getrocknet wird, um eine anorganische, wärmebeständige Schicht, die eine Dicke von 1 bis 5 $\mu$m aufweist, zu bilden.

**6.** Verfahren zur Herstellung eines mehrschichtigen wärmebeständigen Trennelements nach Anspruch 5, wobei in dem Schritt 1 ein Polyolefin in eine mikroporöse Membran nach einem Trocknungsverfahren umgewandelt wird, das ein Verfahren mit einer kalten Dehnung und ein Verfahren mit einer heißen Dehnung enthält.

**7.** Verfahren zur Herstellung eines mehrschichtigen wärmebeständigen Trennelements nach Anspruch 5 oder 6, wobei in dem Schritt 1 das Propylenpolymer nach einem Trocknungsverfahren, das ein Verfahren mit einer kalten Dehnung und ein Verfahren mit einer heißen Dehnung enthält, in eine mikroporöse Membran umgewandelt wird.

**8.** Verfahren zur Herstellung eines mehrschichtigen, wärmebeständigen Trennelements nach einem der Ansprüche 5 bis 7, wobei in dem Schritt 2 ein anorganisches, wärmebeständiges Schichtmittel, das ein Aluminiumoxid und ein Bindemittel enthält, verwendet wird.

**Revendications**

**1.** Elément séparateur multicouche résistant à la chaleur obtenu par stratification d'une couche inorganique résistante à la chaleur sur au moins une surface d'un film substrat comprenant une membrane microporeuse en polyoléfine ayant un allongement de 2% ou moins lorsqu'elle est mise sous tension à 10 N/mm$^2$ à 100°C, dans lequel la membrane microporeuse en polyoléfine comprend un polymère propylène ayant un indice de fluidité à chaud, mesuré dans les conditions JIS K 6758 à 230°C et sous charge de 21,18 N, de 0,1 à 1,0 g/10 min. et un point de fusion à 170°C de 150 et contenant optionnellement au moins un composant sélectionné parmi l'éthylène et les $\alpha$-oléfines ayant de 4 à 8 atomes de carbone, et dans lequel l'épaisseur du film substrat est de 10 à 30 $\mu$m, l'épaisseur d'une couche inorganique résistante à la chaleur est de 1 à 5 $\mu$m, et une hauteur de courbure mesurée par la méthode ci-après (a) est inférieure à 10mm,
méthode de mesure de la hauteur de courbure (a) : un échantillon rectangulaire de 30 cm dans le sens de la longueur x 20 cm dans le sens de la largeur, coupé dans un élément séparateur multicouche résistant à la chaleur est laissé sous atmosphère à 25°C pendant 24 heures puis placé sur une table horizontale telle qu'un côté de la surface rétrécie est orienté vers le haut, les hauteurs des quatre coins de l'échantillon par rapport à la table sont mesurés, et une valeur moyenne des quatre hauteurs est calculée comme hauteur de courbure.

**2.** Elément séparateur multicouche résistant à la chaleur selon la revendication 1, dans lequel la membrane microporeuse polyoléfine est une membrane microporeuse polyoléfine obtenue par microporisation d'une polyoléfine selon un procédé sec comprenant un procédé d'étirement à froid et un procédé d'étirement à chaud.

**3.** Elément séparateur multicouche résistant à la chaleur selon les revendications 1 ou 2, dans lequel le polymère propylène contient au moins un composant sélectionné parmi l'éthylène et les $\alpha$-oléfines ayant de 4 à 8 atomes de carbone.

**4.** Elément séparateur multicouche résistant à la chaleur selon l'une quelconque des revendications 1 à 3, dans lequel la couche inorganique résistante à la chaleur contient de l'alumine et un liant.

**5.** Procédé de fabrication d'un élément séparateur multicouche résistant à la chaleur comprenant les procédés suivants,

Procédé 1 : procédé dans lequel une membrane microporeuse polyoléfine ayant un allongement de 2% ou moins lorsqu'elle est mise sous tension à 10 N/mm$^2$ à 100°C et ayant une épaisseur de 10 à 30 $\mu$m est fabriquée, dans lequel la membrane microporeuse polyoléfine comprend un polymère propylène ayant un indice de fluidité à chaud, mesuré dans les conditions JIS J 6758 à 230°C et sous une charge de 21,18 N, de 0,1 à 1,0 g/10 min et un point de fusion à 170°C de 150 et contenant optionnellement au moins un élément sélectionné parmi l'éthylène et les $\alpha$-oléfines ayant de 4 à 8 atomes de carbone ;
Procédé 2 : procédé dans lequel un agent de couche inorganique résistant à la chaleur contenant des particules inorganiques résistantes à la chaleur et un liant est appliqué sur au moins une surface d'un film substrat comprenant la membrane microporeuse polyoléfine obtenue par le procédé 1 ; et
Procédé 3 : procédé dans lequel le film substrat appliqué avec l'agent de couche inorganique résistant à la chaleur obtenu par le Procédé 2 est séché à une température de 80 à 120°C et sous une force de traction de 4 à 10 N/mm$^2$, et l'agent de couche inorganique résistant à la chaleur est séché pour former une couche inorganique résistante à la chaleur ayant une épaisseur de 1 à 5 $\mu$m.

**6.** Procédé de fabrication d'un élément séparateur multicouche résistant à la chaleur selon la revendication 5,

dans lequel, dans le Procédé 1, une polyoléfine est convertie en une membrane microporeuse selon un procédé sec comprenant un procédé d'étirement à froid et un procédé d'étirement à chaud.

7. Procédé de fabrication d'un élément séparateur multicouche résistant à la chaleur selon les revendications5 ou 6, dans lequel, dans le Procédé 1, selon un procédé sec contenant un procédé d'étirement à froid et un procédé d'étirement à chaud, le polymère propylène est converti en une membrane microporeuse.

8. Procédé de fabrication d'un élément séparateur multicouche résistant à la chaleur selon l'une quelconque des revendications 5 à 7,
dans lequel, dans le Procédé 2, un agent de couche inorganique résistant à la chaleur contenant de l'alumine et un liant est utilisé.

EP 3 252 850 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012176669 A
- WO 2013031012 A
- WO 2014030507 A
- JP 2012182084 A